# EUROPEAN PATENT APPLICATION

(11) **EP 4 414 236 A1**
(43) Date of publication of application: **14.08.2024**
(21) Application number: 24150545.2
(22) Date of filing: 05.01.2024
(51) Int. Cl.: B60W 50/14

(54) **WARNING DEVICE**

(30) Priority: 08.02.2023 JP 2023017820
(71) Applicant: TOYOTA JIDOSHA KABUSHIKI KAISHA, Toyota-shi, Aichi-ken, 471-8571 (JP)
(72) Inventor: Atsushi, ISHII, Toyota-shi, 471-8571 (JP)
(74) Representative: J A Kemp LLP

(57) **Abstract**

A warning device includes a speed detection unit (12) that detects a speed of a vehicle (1), and a determination unit (25) that determines to perform warning when the speed is higher than a first threshold and determines not to perform the warning when the speed is lower than a second threshold that is lower than the first threshold.

## Description

### BACKGROUND OF THE INVENTION

### 1. Field of the Invention

The present invention relates to a technical field of a warning device that performs warning for a vehicle speed.

### 2. Description of Related Art

As a device of this category, for example, a device is proposed in which warning is performed to a driver after a warning extension period set in advance has elapsed, after a vehicle speed exceeds a speed limit (refer to Japanese Unexamined Patent Application Publication No. 2010-128733 (JP 2010-128733 A)).

### SUMMARY OF THE INVENTION

In the technology disclosed in JP 2010-128733 A, the speed limit is set as a value for determining whether to perform warning. By the way, the speed of a vehicle often fluctuates minutely with time. Therefore, when the driver tries to maintain the speed of the vehicle nearly to the speed limit, ON/OFF transition of the warning may occur relatively frequently. Then, the driver may feel uncomfortable due to the warning.

The present invention provides a warning device that can reduce driver's uncomfortable feeling due to the warning.

A warning device according to an aspect of the present invention includes a speed detection unit that detects a speed of a vehicle, and a determination unit that determines to perform warning when the speed is higher than a first threshold and determines not to perform the warning when the speed is lower than a second threshold that is lower than the first threshold.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a configuration of a vehicle according to an embodiment;
FIG. 2 is a flowchart showing an operation of an electronic control unit (ECU) according to the embodiment;
FIG. 3 is a conceptual diagram showing a concept of a threshold for determining ON/OFF of an overspeed warning;
FIG. 4 is a diagram showing an example of a change over time in speed and a change over time in ON/OFF of the overspeed warning;
FIG. 5 is a diagram showing another example of the change over time in speed and the change over time in ON/OFF of the overspeed warning; and
FIG. 6 is a diagram showing the other example of the change over time in speed and the change over time in ON/OFF of the overspeed warning.

### DETAILED DESCRIPTION OF EMBODIMENTS

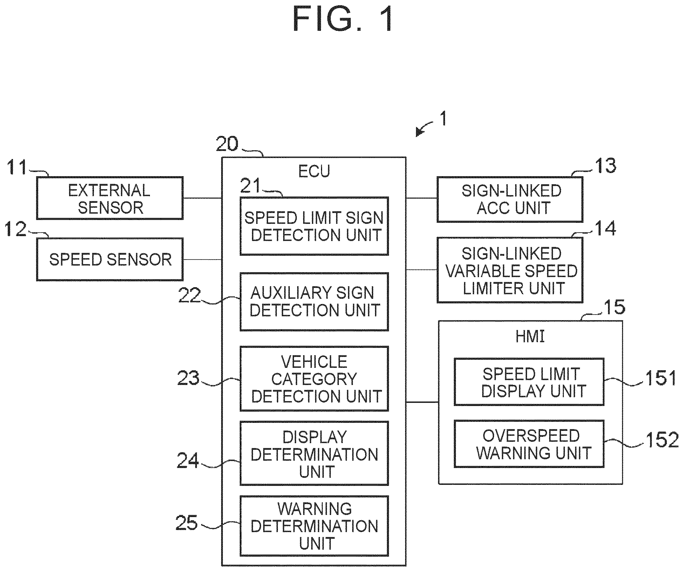

An embodiment according to a warning device will be described with reference to FIGS. 1 to 6.

In FIG. 1, a vehicle 1 includes an external sensor 11, a speed sensor 12, a sign-linked adaptive cruise control (ACC) unit 13, a sign-linked variable speed limiter unit 14, a human machine interface (HMI) 15, and an electronic control unit (ECU) 20. Note that the ECU 20 may be configured to be capable of executing an automated driving in which at least one of acceleration/deceleration and steering of the vehicle 1 is automatically controlled. That is, the ECU 20 may include an automated driving function.

The external sensor 11 includes a camera. The camera is a camera that captures an image of an area in front of the vehicle 1. Such a camera may be disposed on a windshield of the vehicle 1 inside a vehicle cabin. Note that the external sensor 11 may include a plurality of cameras. The external sensor 11 may include at least one of a radar sensor and a laser imaging detection and ranging (LiDAR).

The speed sensor 12 detects the speed of the vehicle 1. The vehicle 1 may include at least one of an acceleration sensor and a yaw rate sensor in addition to the speed sensor 12 as a sensor that is capable of detecting a behavior of the vehicle 1.

The HMI 15 is an interface that inputs/outputs information between a user (for example, a driver) of the vehicle 1 and a system of the vehicle 1 (for example, the ECU 20). The HMI 15 may include a display, a speaker, and the like. Note that the display of the HMI 15 may be a head up display (HUD) or a multi-information display provided on an instrument panel.

The ECU 20 includes a speed limit sign detection unit 21, an auxiliary sign detection unit 22, a vehicle category detection unit 23, a display determination unit 24, and a warning determination unit 25 as a functional block that is constructed logically or as a processing circuit that is implemented physically. Note that, at least one of the speed limit sign detection unit 21, the auxiliary sign detection unit 22, the vehicle category detection unit 23, the display determination unit 24, and the warning determination unit 25 may be realized in a format in which the logical functional block and the physical processing circuit (that is, hardware) is mixed. When at least a part of the speed limit sign detection unit 21, the auxiliary sign detection unit 22, the vehicle category detection unit 23, the display determination unit 24, and the warning determination unit 25 is the functional block, at least the part of the speed limit sign detection unit 21, the auxiliary sign detection unit 22, the vehicle category detection unit 23, the display determination unit 24, and the warning determination unit 25 may be realized by the ECU 20 executing a predetermined computer program.

The ECU 20 may acquire (in other words, read) the predetermined computer program from a storage device (not shown) provided in the vehicle 1. The ECU 20 may read the predetermined computer program stored in a computer-readable non-temporary storage medium using a storage medium reading device. The ECU 20 may acquire (in other words, download or read) the predetermined computer program from a device (not shown) outside the vehicle 1 through a communication device. Note that at least one of an optical disk, a magnetic medium, a magneto-optical disk, a semiconductor memory, and any other medium capable of storing a program may be used as the storage medium for storing the predetermined computer program.

The speed limit sign detection unit 21 detects a speed limit sign from an image captured by the camera included in the external sensor 11. The speed limit sign detection unit 21 may detect the speed limit sign by performing an image process on the image. The image process may include, for example, at least one of an edge extraction process, a noise removal process, and a pattern matching process. When an image is input, the speed limit sign detection unit 21 may detect the speed limit sign using an arithmetic model for detecting the speed limit sign. An example of such an arithmetic model includes an arithmetic model using a neural network (for example, a convolutional neural network (CNN)).

The auxiliary sign detection unit 22 detects an auxiliary speed sign from an image captured by the camera included in the external sensor 11. The auxiliary sign detection unit 22 may detect an auxiliary sign by performing the image process on the image. The image process may include, for example, at least one of the edge extraction process, the noise removal process, and the pattern matching process. When an image is input, the auxiliary sign detection unit 22 may detect the auxiliary sign using an arithmetic model for detecting the auxiliary sign. An example of such an arithmetic model includes an arithmetic model using the neural network (for example, CNN).

Note that the auxiliary sign detection unit 22 may detect only the auxiliary sign indicating that the speed limit indicated by the speed limit sign is to be assisted. In this case, the auxiliary sign detection unit 22 may start a process for detecting the auxiliary sign on condition that the speed limit sign detection unit 21 detects the speed limit sign. Note that the auxiliary sign detection unit 22 may detect the auxiliary sign indicating at least one of "date/time", "section", and "vehicle category", for example.

The vehicle category detection unit 23 detects the vehicle category of the vehicle 1. For example, when the ECU 20 stores information in advance indicating the vehicle category of the vehicle 1, the vehicle category detection unit 23 may detect the vehicle category of the vehicle 1 based on the information. For example, when the ECU 20 stores information in advance indicating at least one of a name and a model of the vehicle 1, the vehicle category detection unit 23 identifies the vehicle category to which the vehicle 1 corresponds from the information, and thereby the vehicle category detection unit 23 may detect the vehicle category of the vehicle 1. Note that the vehicle category may include at least one of a large passenger vehicle, an ordinary passenger vehicle, a light vehicle, a heavy motorcycle, an ordinary motorcycle, a large freight vehicle, a large special vehicle, a trailer, an ordinary motorcycle (125 cc or less), a motorized bicycle, and an emergency vehicle.

The display determination unit 24 may determine (or specify) the speed limit of the vehicle 1 based on the detection result of the speed limit sign detection unit 21, the detection result of the auxiliary sign detection unit 22, and the detection result of the vehicle category detection unit 23. Note that when the speed limit sign is not detected by the speed limit sign detection unit 21, the display determination unit 24 may identify a road on which the vehicle 1 is traveling, based on location information indicating the location of the vehicle 1 and map information. Then, the display determination unit 24 may determine (or specify) the speed limit of the vehicle 1 based on the identified road and the vehicle category of the vehicle 1 detected by the vehicle category detection unit 23. Note that the location information indicating the location of the vehicle 1 may be acquired by using a global navigation satellite system (GNSS), for example.

The display determination unit 24 transmits speed limit information indicating the speed limit of the vehicle 1 to the HMI 15. A speed limit display unit 151 of the HMI 15 displays the speed limit based on the speed limit information. At this time, the speed limit display unit 151 may display a character string indicating the speed limit. The speed limit display unit 151 may display an image indicating the speed limit. The speed limit display unit 151 may display an icon imitating the speed limit sign indicating the speed limit.

When the sign-linked ACC unit 13 is operating (in other words, when the sign-linked ACC is functioning), the display determination unit 24 transmits the speed limit information to the sign-linked ACC unit 13. Here, based on an output of the external sensor 11 (for example, an image captured by the camera, an output of the radar sensor, and an output of the LiDAR), the sign-linked ACC unit 13 may detect a distance between a preceding vehicle that travels immediately in front of the vehicle 1 and the vehicle 1. The sign-linked ACC unit 13 may automatically control the acceleration/deceleration of the vehicle 1 such that the distance between the preceding vehicle and the vehicle 1 approaches (typically matches) a predetermined distance. In addition, when the distance between the preceding vehicle and the vehicle 1 is longer than the predetermined distance, or when the preceding vehicle is not present in a predetermined range in front of the vehicle 1, the sign-linked ACC unit 13 may automatically control the acceleration/deceleration of the vehicle 1 such that the speed of the vehicle 1 approaches (typically matches) a predetermined speed. The predetermined speed may be set by the user of the vehicle 1 (for example, the driver). When the predetermined speed set by the user is higher than the speed limit indicated by the speed limit information, the sign-linked ACC unit 13 automatically sets the predetermined speed as the speed limit.

The display determination unit 24 may transmit the speed limit information to the sign-linked variable speed limiter unit 14. The sign-linked variable speed limiter unit 14 may correct a control signal transmitted to a driving actuator of the vehicle 1 such that the speed of the vehicle 1 does not exceed the predetermined speed limit. Alternatively, the sign-linked variable speed limiter unit 14 may control the driving actuator such that the speed of the vehicle 1 does not exceed the predetermined speed limit. The sign-linked variable speed limiter unit 14 may change the predetermined speed limit based on the speed limit information. Note that when the sign-linked ACC unit 13 is operating (in other words, when the sign-linked ACC unit 13 is functioning), the sign-linked variable speed limiter unit 14 may not operate. In this case, the display determination unit 24 may not transmit the speed limit information to the sign-linked variable speed limiter unit 14.

Note that when the vehicle 1 is a vehicle that includes an engine, the driving actuator may be an actuator that controls the amount of air supplied to the engine (for example, throttle opening). When the vehicle 1 is a hybrid electric vehicle, the driving actuator may be a concept including a motor as a power source. That is, when the vehicle 1 is the hybrid electric vehicle, the driving actuator may include the actuator that controls the amount of air supplied to the engine, and the motor as the power source. When the vehicle 1 is a battery electric vehicle, the driving actuator may be the motor as the power source.

The display determination unit 24 transmits the speed limit information to the warning determination unit 25. Based on the speed limit indicated by the speed limit information and the speed of the vehicle 1 detected by the speed sensor 12, the warning determination unit 25 determines whether to perform overspeed warning. Note that the warning device according to the present embodiment may be configured to include the speed sensor 12 and the warning determination unit 25.

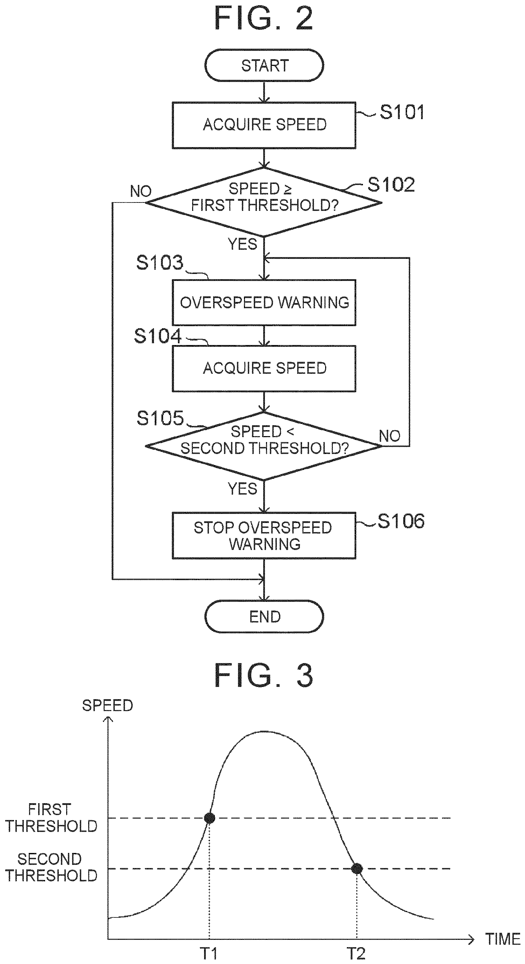

The operation of the warning determination unit 25 will be described with reference to a flowchart of FIG. 2. In FIG. 2, the warning determination unit 25 acquires the speed of the vehicle 1 detected by the speed sensor 12 (step S101). The warning determination unit 25 determines whether the speed of the vehicle 1 is higher than or equal to a first threshold (step S 102). In the process of step S 102, when the speed of the vehicle 1 is determined to be lower than the first threshold (step S 102: No), the warning determination unit 25 determines not to perform the overspeed warning. As a result, the operation shown in FIG. 2 ends. After that, the process of step S 101 may be performed after a predetermined period of time has elapsed. That is, the operation shown in FIG. 2 may be repeatedly performed at a cycle corresponding to a predetermined period of time.

In the process of step S102, when the speed of the vehicle 1 is determined to be higher than or equal to the first threshold (step S102: Yes), the warning determination unit 25 determines to perform the overspeed warning. In this case, the warning determination unit 25 transmits a warning signal indicating a warning ON state corresponding to execution of the overspeed warning to the HMI 15. As a result, an overspeed warning unit 152 of the HMI 15 performs the overspeed warning based on the warning ON state indicated by the warning signal (step S103). The overspeed warning unit 152 may perform the overspeed warning by lighting or blinking a predetermined lamp. The overspeed warning unit 152 may perform the overspeed warning by emitting a warning sound. The overspeed warning unit 152 may perform the overspeed warning by displaying an image indicating that the speed of the vehicle 1 is overspeed.

After the process of step S103, the warning determination unit 25 acquires the speed of the vehicle 1 detected by the speed sensor 12 (step S104). The warning determination unit 25 determines whether the speed of the vehicle 1 is lower than a second threshold (step S105). Here, the second threshold is a value lower than the first threshold (see FIG. 3, for example). In the process of step S105, when the speed of the vehicle 1 is determined to be higher than or equal to the second threshold (step S105: No), the warning determination unit 25 determines to perform the overspeed warning. In this case, the warning determination unit 25 transmits the warning signal indicating the warning ON state to the HMI 15. After that, the process of step S103 is performed. That is, the execution of the overspeed warning is continued.

In the process of step S105, when the speed of the vehicle 1 is determined to be lower than the second threshold (step S105: Yes), the warning determination unit 25 determines not to perform the overspeed warning (in other words, stopping the overspeed warning). In this case, the warning determination unit 25 transmits the warning signal indicating a warning OFF state corresponding to stopping of the overspeed warning to the HMI 15. As a result, the overspeed warning unit 152 of the HMI 15 stops the overspeed warning based on the warning OFF state indicated by the warning signal (step S106). After that, the process of step S101 may be performed after the predetermined period of time has elapsed.

The overspeed warning will be explained with reference to FIG. 3. In FIG. 3, a continuous line indicates an example of a change over time of the speed of the vehicle 1. At time T1 in FIG. 3, the speed of the vehicle 1 becomes higher than or equal to the first threshold, so that the warning determination unit 25 determines to perform the overspeed warning. As a result, the overspeed warning unit 152 performs the overspeed warning. After that, at time T2 in FIG. 3, the speed of the vehicle 1 becomes lower than the second threshold, so that the warning determination unit 25 determines not to perform the overspeed warning. As a result, the overspeed warning unit 152 stops the overspeed warning. Therefore, in the example shown in FIG. 3, the overspeed warning is performed during the time T1 to the time T2.

As is clear from FIGS. 2 and 3, the first threshold is a value for determining whether to start the overspeed warning, and the second threshold is a value for determining whether to stop the overspeed warning. Therefore, when the overspeed warning is performed by the overspeed warning unit 152, the speed of the vehicle 1 is lower than the first threshold, and the speed of the vehicle 1 is higher than the second threshold, the warning determination unit 25 determines to perform the overspeed warning. When the overspeed warning is performed by the overspeed warning unit 152, and the speed of the vehicle 1 is lower than the second threshold, the warning determination unit 25 determines not to perform the overspeed warning.

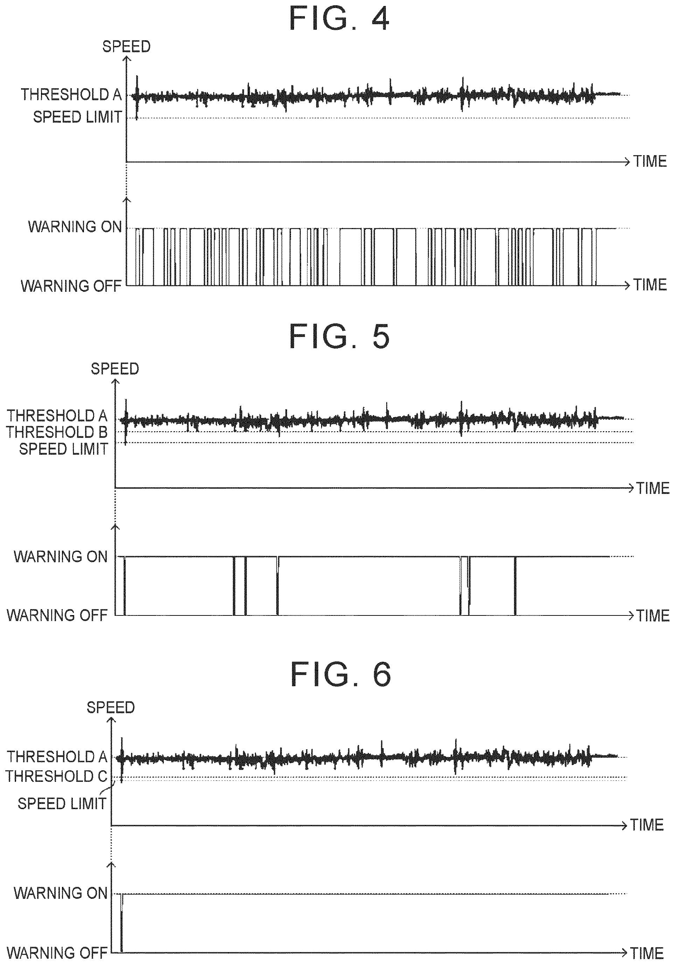

Next, the relationship between the first threshold and the second threshold, and the speed limit will be described with reference to FIGS. 4 to 6. For example, the speed of the vehicle 1 displayed by the HMI 15 is often displayed as a value acquired by truncating decimal numbers. On the other hand, the speed of the vehicle 1 detected by the speed sensor 12 also includes decimal numbers. Specifically, when the speed of the vehicle 1 detected by the speed sensor 12 is 40.1 kilometers per hour, the numerical value indicating the speed of the vehicle 1 displayed by the HMI 15 is often "40".

For example, when the speed limit is 40 kilometers per hour, and the threshold for determining whether to start the overspeed warning (corresponding to the first threshold described above) is set to 40.1 kilometers per hour, the following issue arises. That is, when the speed of the vehicle 1 detected by the speed sensor 12 is 40.2 kilometers per hour, the overspeed warning is performed even though the numerical value indicating the speed of the vehicle 1 displayed by the HMI 15 is "40". Then, even though the speed of the vehicle 1 displayed by the HMI 15 does not exceed the speed limit, the user (for example, the driver) of the vehicle 1 may feel uncomfortable due to the overspeed warning being performed.

Therefore, the threshold for determining whether to start the overspeed warning (corresponding to the first threshold described above) may be set to a value that is higher than or equal to the speed limit by 1 kilometer per hour. Here, considering that the overspeed warning is not performed until the speed of the vehicle 1 becomes higher than or equal to the threshold for determining whether to start the overspeed warning (corresponding to the first threshold described above) after the speed of the vehicle 1 exceeds the speed limit, the threshold for determining whether to start the overspeed warning (corresponding to the first threshold described above) may be preferably set to a value that is higher than the speed limit by 1 kilometer per hour. This is because the period from when the speed of the vehicle 1 exceeds the speed limit to when the overspeed warning is started can be made relatively short.

The upper part of FIG. 4 shows an example of the change over time of the speed of the vehicle 1. The lower part of FIG. 4 shows an example of the change over time of the state indicated by the warning signal (that is, the warning ON state and the warning OFF state). In FIG. 4, a threshold A is a value higher than the speed limit by 1 kilometer per hour.

In the example shown in FIG. 4, the threshold for determining whether to start the overspeed warning (corresponding to the first threshold described above) and the threshold for determining whether to stop the overspeed warning (corresponding to the second threshold described above) is assumed to be the threshold A. In the example shown in FIG. 4, the warning determination unit 25 determines to perform the overspeed warning when the speed of the vehicle 1 is higher than or equal to the threshold A. Further, when the speed of the vehicle 1 is lower than the threshold A, the warning determination unit 25 determines to stop the overspeed warning.

As shown in the upper part of FIG. 4, the speed of the vehicle 1 often fluctuates minutely with time. The speed fluctuation occurs due to an influence of disturbances (for example, an unevenness and a slope of a road surface and wind), even when the driver of the vehicle 1 keeps the operation amount of the accelerator pedal constant, or even when the sign-linked ACC unit 13 automatically controls the acceleration/deceleration of the vehicle 1.

For this reason, when the threshold for determining whether to start the overspeed warning (corresponding to the first threshold described above) and the threshold for determining whether to stop the overspeed warning (corresponding to the second threshold described above) are the same value (the threshold A here), the state indicated by the warning signal (that is, the warning ON state and the warning OFF state) changes relatively frequently due to the influence of the disturbance (see the lower part of FIG. 4). In other words, a transition between the warning ON state and the warning OFF state occurs relatively frequently. Then, due to the overspeed warning, the user (for example, the driver) of the vehicle 1 may feel uncomfortable.

Next, the upper part of FIG. 5 shows an example of the change over time of the speed of the vehicle 1. The lower part of FIG. 5 shows another example of the change over time of the state indicated by the warning signal (that is, the warning ON state and the warning OFF state). In FIG. 5, a threshold A is a value higher than the speed limit by 1 kilometer per hour. In FIG. 5, a threshold B is a value higher than the speed limit by 0.5 kilometers per hour. Note that the example of the change over time of the speed of the vehicle 1 shown in the upper part of FIG. 5 is the same as the example of the change over time of the speed of the vehicle 1 shown in the upper part of FIG. 4.

In the example shown in FIG. 5, the threshold for determining whether to start the overspeed warning (corresponding to the first threshold described above) is assumed to be the threshold A, and the threshold for determining whether to stop the overspeed warning (corresponding to the second threshold described above) is assumed to be the threshold B. In the example shown in FIG. 5, the warning determination unit 25 determines to perform the overspeed warning when the speed of the vehicle 1 is higher than or equal to the threshold A. Further, when the speed of the vehicle 1 is lower than the threshold B, the warning determination unit 25 determines to stop the overspeed warning.

By comparing the change in the state indicated by the warning signal shown in the lower part of FIG. 5 with the change in the state indicated by the warning signal shown in the lower part of FIG. 4, the following can be said. That is, by making the threshold for determining whether to stop the overspeed warning (here, the threshold B) lower than the threshold for determining whether to start the overspeed warning (here, the threshold A), the change in the state indicated by the warning signal can be suppressed.

Next, the upper part of FIG. 6 shows an example of the change over time of the speed of the vehicle 1. The lower part of FIG. 6 shows an example of the change over time of the state indicated by the warning signal (that is, the warning ON state and the warning OFF state). In FIG. 6, a threshold A is a value higher than the speed limit by 1 kilometer per hour. In FIG. 6, a threshold C is a value higher than the speed limit by 0.1 kilometers per hour. Note that the example of the change over time of the speed of the vehicle 1 shown in the upper part of FIG. 6 is the same as the example of the change over time of the speed of the vehicle 1 shown in the upper part of FIG. 4.

In the example shown in FIG. 6, the threshold for determining whether to start the overspeed warning (corresponding to the first threshold described above) is assumed to be the threshold A, and the threshold for determining whether to stop the overspeed warning (corresponding to the second threshold described above) is assumed to be the threshold C. In the example shown in FIG. 6, the warning determination unit 25 determines to perform the overspeed warning when the speed of the vehicle 1 is higher than or equal to the threshold A. Further, when the speed of the vehicle 1 is lower than the threshold C, the warning determination unit 25 determines to stop the overspeed warning.

By comparing the change in the state indicated by the warning signal shown in the lower part of FIG. 6 with the change in the state indicated by the warning signal shown in the lower part of FIG. 5, the following can be said. That is, the change in the state indicated by the warning signal can be reduced in a case where the threshold for determining whether to stop the overspeed warning is a value that is higher than the speed limit by 0.1 kilometers per hour as compared with a case where the threshold for determining whether to stop the overspeed warning is higher than the speed limit by 0.5 kilometers per hour.

The following can be said from the contents described with reference to FIGS.4 to 6. That is, by making the threshold for determining whether to stop the overspeed warning (corresponding to the second threshold described above) lower than the threshold for determining whether to start the overspeed warning (corresponding to the first threshold described above), the change in the state indicated by the warning signal (in other words, the transition between the warning ON state and the warning OFF state) can be reduced. When the threshold for determining whether to start the overspeed warning (corresponding to the first threshold described above) is a value that is higher than the speed limit by 1 kilometer per hour, the change in the state indicated by the warning signal can be reduced in a case where the threshold for determining whether to stop the overspeed warning (corresponding to the second threshold described above) is a value that is higher than the speed limit by 0.1 kilometers per hour as compared with a case where the threshold for determining whether to stop the overspeed warning is a value that is higher than the speed limit by 0.5 kilometers per hour.

Therefore, the first threshold is preferably a value higher than the speed limit by 1 kilometer per hour. The second threshold is preferably a value higher than the speed limit by 0.1 kilometers per hour. In this case, a difference between the first threshold and the second threshold is 0.9 kilometers per hour.

The first threshold is a value for determining whether to start the overspeed warning. Then, when the warning determination unit 25 determines that the speed of the vehicle 1 is higher than or equal to the first threshold, the overspeed warning for notifying that the speed of the vehicle 1 has exceeded the speed limit is performed. Therefore, it can be said that the first threshold is a value for determining whether the speed of the vehicle 1 exceeds the speed limit. The second threshold is a value for determining whether to stop the overspeed warning. Then, when the warning determination unit 25 determines that the speed of the vehicle 1 is lower than the second threshold, the overspeed warning for notifying that the speed of the vehicle 1 has exceeded the speed limit is stopped. Therefore, it can be said that the second threshold is a value for determining whether the speed of the vehicle 1 falls behind the speed limit.

Note that the first threshold and the second threshold described above are merely examples, and the present invention is not limited to these. The difference between the first threshold and the second threshold may be determined in consideration of at least one of the influence of the disturbance and the influence of control error of the vehicle 1, for example. Specifically, a speed fluctuation width of the vehicle 1 due to at least one of the influence of the disturbance and the influence of the control error of the vehicle 1 may be acquired experimentally or empirically, or through simulation. The difference between the first threshold and the second threshold may be the acquired maximum value of the fluctuation width. The first threshold may be a fixed value or a variable value according to some physical quantity or parameters. The second threshold may be set as a value lower than the first threshold by the difference between the first threshold and the second threshold. Note that when the first threshold is the variable value, the first threshold may be set according to the operation characteristics of the driver of the vehicle 1. For example, the first threshold when the fluctuation width of the amount of depression of the accelerator pedal by the driver is relatively large, may be set to a larger value than the first threshold when the fluctuation width of the amount of depression of the accelerator pedal by the driver is relatively low.

### Technical Effect

By setting the first threshold for determining whether to start the overspeed warning to a value that is, for example, higher than the speed limit by 1 kilometer per hour, the overspeed warning can be started when the numerical value indicating the speed of the vehicle 1 displayed by the HMI 15 exceeds the speed limit. This can reduce uncomfortable feeling of the user (for example, the driver) of the vehicle 1 who visually recognizes the numerical value indicating the speed of the vehicle 1 displayed by the HMI 15, due to the overspeed warning.

By making the second threshold for determining whether to stop the overspeed warning lower than the first threshold for determining whether to start the overspeed warning (in other words, by providing a hysteresis characteristic), the frequency of the transitions between the warning ON state and the warning OFF state can be suppressed. Therefore, it is possible to reduce the uncomfortable feeling of the user (for example, the driver) of the vehicle 1 due to the overspeed warning.

Aspects of the invention derived from the embodiment described above will be described below.

A warning device according to an aspect of the present invention includes a speed detection unit that detects a speed of a vehicle, and a determination unit that determines to perform warning when the speed is higher than a first threshold and determines not to perform the warning when the speed is lower than a second threshold that is lower than the first threshold. In the above described embodiment, the speed sensor 12 corresponds to an example of the speed detection unit, and the warning determination unit 25 corresponds to an example of the determination unit.

In the warning device, the determination unit may determine to perform the warning due to the speed that is higher than the first threshold, and the determination unit may determine to perform the warning when the warning is performed, the speed is lower than the first threshold, and the speed is higher than the second threshold.

In the warning device, the determination unit may determine to perform the warning due to the speed that is higher than the first threshold, and the determination unit may determine not to perform the warning when the warning is performed, and the speed is lower than the second threshold.

In the warning device, the first threshold may be a value for determining whether the speed exceeds a speed limit, and the second threshold may be a value for determining whether the speed falls behind the speed limit.

In the warning device, a difference between the first threshold and the second threshold may be 0.9 kilometers per hour.

In the warning device, the first threshold may be a value higher than a speed limit by 1 kilometer per hour, and the second threshold may be a value higher than the speed limit by 0.1 kilometers per hour.

In the warning device, the warning may be warning for overspeed.

The present invention is not limited to the above described embodiment, and can be modified as appropriate within a range that does not contradict the gist or idea of the invention that can be read from the claims and the entire specification. A warning device that includes such modifications is also included in the technical scope of the present invention.

## Claims

1. A warning device comprising:
a speed detection unit (12) that detects a speed of a vehicle (1); and
a determination unit (25) that determines to perform warning when the speed detected by the speed detection unit (12) is higher than a first threshold, and determines not to perform warning when the speed detected by the speed detection unit (12) is lower than a second threshold that is lower than the first threshold.

2. The warning device according to claim 1, wherein:
the determination unit (25) determines to perform the warning due to the speed detected by the speed detection unit (12), the speed being higher than the first threshold; and
when the warning is performed, the speed detected by the speed detection unit (12) is lower than the first threshold, and the speed detected by the speed detection unit (12) is higher than the second threshold, the determination unit (25) determines to perform the warning.

3. The warning device according to claim 1, wherein the determination unit (25) determines to perform the warning due to the speed that is higher than the first threshold, and the determination unit (25) determines not to perform the warning when the warning is performed, and the speed is lower than the second threshold.

4. The warning device according to claim 1, wherein:
the first threshold is a value for determining whether the speed detected by the speed detection unit (12) exceeds a speed limit; and
the second threshold is a value for determining whether the speed detected by the speed detection unit (12) falls behind the speed limit.

5. The warning device according to claim 1, wherein a difference between the first threshold and the second threshold is 0.9 kilometers per hour.

6. The warning device according to claim 1, wherein:
the first threshold is a value higher than a speed limit by 1 kilometer per hour; and
the second threshold is a value higher than the speed limit by 0.1 kilometers per hour.

7. The warning device according to claim 1, wherein the warning is warning for overspeed.

8. The warning device according to claim 1, further comprising a warning unit (152) that performs the warning to a user of the vehicle (1) when the determination unit (25) determines to perform the warning.

9. The warning device according to claim 1, wherein the speed detection unit (12) is a speed sensor mounted on the vehicle (1).

10. The warning device according to claim 8, wherein:
the warning unit (152) includes a human machine interface (15) provided on the vehicle (1); and
the warning is performed by at least one of the human machine interface (15) making a sound and the human machine interface (15) displaying an image.
